# EUROPEAN PATENT SPECIFICATION

(11) **EP 3 247 835 B1**
(45) Date of publication and mention of the grant of the patent: **24.10.2018**
(21) Application number: 16707937.5
(22) Date of filing: 20.01.2016
(51) Int. Cl.: D21C 5/02, B03D 1/02, D21F 1/70, D21H 11/14, D21B 1/32

(54) **PLANTLAYOUT AND DEINKING METHOD**
ANLAGENLAYOUT UND ENTFÄRBUNGSVERFAHREN
AGENCEMENT D'USINE ET PROCÉDÉ DE DÉSENCRAGE

(30) Priority: 20.01.2015 DE 102015000359
(43) Date of publication of application: 29.11.2017
(73) Proprietor: Stora Enso Sachsen GmbH, 04838 Eilenburg (DE)
(72) Inventor: KRAUSE, Roman, 04155 Leipzig (DE); HOLUBEC, Johannes, 04275 Leipzig (DE)
(74) Representative: Westphal, Mussgnug & Partner Patentanwälte mbB
(86) International application number: PCT/IB2016/000030
(87) International publication number: WO 2016/116802

(56) References cited:
- EP-A1- 0 888 819
- CA-C- 1 335 147
- DE-A1- 3 305 131

## Description

The invention concerns a deinking plant layout according to the preamble of claim 1 and a deinking method according to the preamble of claim 4 for the processing of paper wastes, with at least two deinking circuits connected in series, having at least one preflotation in a first circuit, a disperser and a post-flotation connected after said disperser in a second circuit, by means of which postflotation a reject fraction with dispersed ink, fillers, fines and fiber can be separated, as is known for example from CA 1335147.

DE 3305131 A1 discloses returning of dewatering waters into a preceding process stage of a deinking line.

It does not matter for the invention how many flotation processes are hooked up before or after dispersing in said disperser. By the term preflotation used here is also meant throughout two flotation stages of a circuit or several flotation stages of several circuits, also known as loops, connected upstream from said dispersing, as long as they are indeed arranged upstream from the dispersing. It is also possible to provide throughout two postflotations downstream from the disperser. The use of dispersing of this kind includes dispersing at the end of a first circuit as well as dispersing at the start of a second circuit.

Deinking processes are constantly being modified to be more economical and sparing to the environment.

This problem is solved by a layout according to claim 1 and a deinking method according to claim 4, comprising the respective characterizing features. Advantageous embodiments are given in the respective subclaims.

According to the invention, at least one partial stream of rejects of the postflotation connected in series with a disperser is returned to the preceding first circuit, prior to and/or into the preflotation. This reduces to only one discharge sink per layout and not per flotation stage. Heretofore, the disperser always caused a kind of rupture of the circuits. Heretofore it was assumed that recycling rejects with dispersed ink was not advisable or can even be harmful. Finally, there is substantial expense invested in the dispersing process and one is reluctant to again add the resulting reject flow back in upstream from the dispersing. Therefore, the invention is surprising with its proposed recycling and the achieved yield increases of up to 8% thus far. It should therefore be counted a success of the invention that less paper waste needs to be added as raw material to the same degree as previously dispersed rejects occur in the postflotation.

The reject mixture of the postflotation behind the disperser, consisting of dispersed ink, fillers, fines and fibers, could also be called disperser rejects, because this flotation reject arises in this form on account of disperser influences. Unexpectedly, it does not appear to be a problem for the preflotation to separate and discharge for example the dispersed inks of the reject of the postflotation along with the previous preflotation reject, having been made floatable only by the dispersing. Apparently they do not need to be dispersed again to a significant extent, as was feared, because they do not appear to reach the disperser a second time, which is quite impressive.

Thus far, the rejects of both flotation stages of known deinking layouts are taken to a sludge treatment process, such as incineration. The invention makes it possible to fill the often existing incinerator capacities with outside material, so that new added value is created in the power plant. The result of the invention is a lower specific raw material demand per ton of paper produced of the same quality, so that fewer rejects occur already at the start of the material processing, for example, fewer drum rejects. Fewer chemicals are needed for dissolving.

Yet the experiments in the context of the invention contrary to all expectations led to substantial improvements in the yield for the same quality of the deinked pulp. Studies on the composition of the deinked pulp have shown that its filler and fines content could be substantially boosted, so that certain optical properties were even more improved. The rejects of the postflotation have ink, stickies, as well as fillers, fines and fibers of altered characteristics as compared to these components in the preflotation feed heretofore. An altered characteristic means, for example, that inks have been loosened from fibers and fines in the disperser. The dissolved ink particles are then discharged in the postflotation - in addition to fines and fillers as well.

The present invention relates further to a process of producing de-inked pulp, which process involves at least two, separate flotation lines, e.g. a first and a second flotation line, producing in a parallelism two separate de-inked pulps. The invention is characterized in that reject from an after flotation dispersing flotation position in said first flotation line is returned to (or before) a flotation step in the second flotation line.

The advantages with the invention are that the yield and the efficiency are increased. The pulps produced in the different lines might e.g. be of different qualities and have different requirements on e.g. brightness. Therefore, it is efficient to return flotation reject from a line with higher quality demands to a line with lower quality demands.
Preferably, the first and the second flotation lines each includes several flotation steps, including a pre-flotation and a post-flotation and the reject from the post-flotation step in said first flotation line is returned to (or before) the pre-flotation step in the second flotation line.

Another benefit is the saving on fresh water and waste water, since the process water of the postflotation is no longer taken directly as sludge from the postflotation rejects to the waste water treatment plant. The filtrate with the postflotation rejects is taken to the first water circuit and the counterflow principle for multiloop deinking layouts is utilized even more optimally. The result is a lower specific content of impurities in the solid and filtrate streams in an overall balance of the multiloop deinking layout, as compared to the previous operation without disperser rejects recycling. The water now made usable close to the papermaking machinery, as seen in the product cycle, with its quite high quality, namely, less impurity load, is no longer a disadvantage - utilization of rejects needing to be dewatered - but instead a savings for the water quality at the new point of use, further upstream toward the solids dissolving. For simplicity, impurity content means here dissolved solids or collective parameters such as CSB, cationic demand, conductivity, etc. Since fewer dissolved impurities are found, the demand for chemicals is lower.

Soap can be reduced at the inlet of the preflotation, since a large portion of the heretofore unused soap can be used via the postflotation rejects.

Thanks to less postflotation sludge, less sludge accrues for sludge dewatering. This saves on dewatering chemicals.

The recycling of the rejects in the context of the invention according to advantageous embodiments goes into the dissolution water for the dissolving, into any given filtrate or solid streams prior to the flotation, or into the inlets of the primary and/or secondary preflotation of the first circuit.

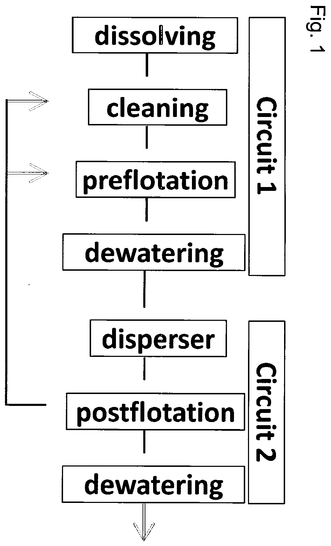

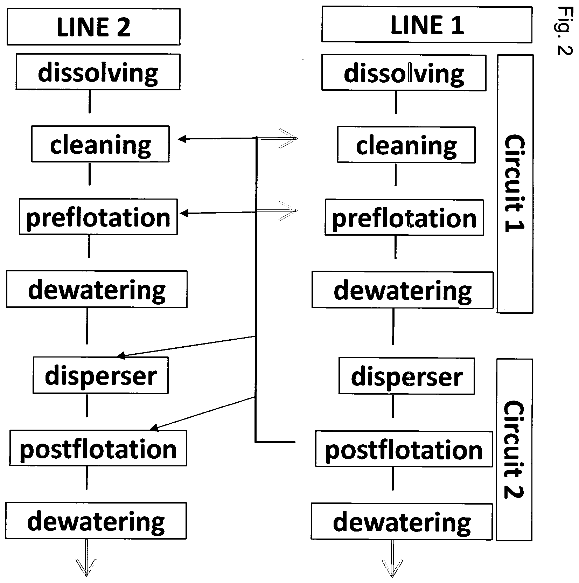

The invention shall be described hereafter by means of a flow chart presented in Figures 1 and 2.

The deinking process begins, as is known, with the dissolving of waste paper in a pulper or a drum. The solid suspension of waste paper so formed is cleaned in sorting baskets and cyclones, before further deinking chemicals are added especially in the case of graph paper and a preflotation specifically removes inks, so that a preliminary cleaned pulp stream is produced.

A second deinking circuit has at the start a disperser, which is supposed to make floatable the inks still remaining in the preflotation product. However, the preflotation product is first dewatered and optionally stockpiled, in order to give the chemicals time to work.

Downstream from the disperser, the postflotation in the second circuit separates a reject fraction with dispersed inks. The postflotation reject, according to one variant embodiment of the invention, is returned entirely to the preceding first circuit, and this prior to and in the preflotation.

Figure 2 shows the alternative or additional integration of a parallel deinking line when returning dispersing rejects as mentioned as invention. Although drawing's arrows between line 1 and line 2 show a splitting of the postflotation reject of circuit 2 of line 1 so that this after dispersing postflotation reject may reach all of the arrow ends, namely the following target positons of parallel deinking line 2: preflotation or cleaning before preflotation and/or pulp to be dispersed or dispersed pulp entering a post-dispersing flotation. But as not further subject of separate drawings but in the range of the invention it should be clear that the post-dispersing flotation reject of one deinking line is introduced into another deinking line even if not additionally returned to the same first deinking line itself, also.

## Claims

1. Plantlayout for the processing of paper wastes, with at least two deinking circuits connected in series, having at least
1.1 one preflotation in a first circuit,
1.2 a disperser and
1.3 a postflotation connected after the disperser in a second circuit, by means of which postflotation a reject fraction with dispersed ink, fillers, fines and fiber can be separated,
**characterized in that**
1.4 at least one partial stream of rejects of the postflotation is returned to the preceding first circuit, prior to and/or in the preflotation and/or into a further flotation preceding position of a parallel deinking line for production of a further deinked pulp.

2. Plantlayout according to claim 1, **characterized in that** at least one partial stream of recycled rejects is taken directly to a product stream arriving from a cleaning upstream from the preflotation and/or indirectly by a filtrate stream to the preflotation.

3. Plantlayout according to claim 2, **characterized in that** the filtrate stream containing the at least one partial stream of rejects is taken to the solids dissolving process at the start of the cycle.

4. Deinking method for processing of paper wastes, with at least two deinking circuits connected in series, wherein
4.1 a preflotation in a first circuit separates inks as well as fillers, fines and fibers from a fiber suspension, so that a precleaned pulp stream is produced,
4.2 a disperser by means of energy input processes the precleaned pulp stream in order to loosen adherent inks or fragment them into loosened and large ink particles, and
4.3 a postflotation after the disperser in a second circuit separates a reject fraction with dispersed inks as well as fillers, fines and fibers,
**characterized in that**
4.4 at least one partial stream of rejects of the postflotation is returned to the preceding first circuit, prior to or in the preflotation and/or into a flotation preceding position of a parallel deinking line for production of a further deinked pulp.

5. Deinking method according to claim 4, **characterized in that** the recycled rejects are taken at least in part directly to a product stream arriving from a cleaning upstream from the preflotation and/or indirectly by a filtrate stream to the preflotation.

6. Deinking method according to claim 5, **characterized in that** the filtrate stream containing the at least one partial stream of rejects is taken to the solids dissolving process at the start of the cycle.

## Patentansprüche

1. Anlagenlayout Anlage zur Aufbereitung von Altpapier, mit zumindest zwei hintereinandergeschalteten Deinkingkreisläufen, zumindest aufweisend
1.1 eine Vorflotation in einem ersten Kreislauf,
1.2 einen Disperger und
1.3 dem Disperger nachgeschaltet eine Nachflotation in einem zweiten Kreislauf, mittels welcher Nachflotation ein Rejekt mit dispergierten Druckfarben sowie Füll-, Fein- und Faserstoffen abtrennbar ist,
**dadurch gekennzeichnet, dass**
1.4 zumindest ein Teilstrom des Rejekts der Nachflotation dem vorangehenden ersten Kreislauf, und zwar vor die oder in die Vorflotation, und/oder an eine weitere Position vor der Flotation einer parallelen Deinkingstraße zur Erzeugung eines weiteren deinkten Faserstoffs rückgeführt ist.

2. Anlagenlayout nach Anspruch 1, **dadurch gekennzeichnet, dass** zumindest ein Teilstrom der rückgeführten Rejekts direkt in einen aus einer der Vorflotation vorangeschalteten Reinigung kommenden Gutstoffstrom und/oder indirekt über einen Filtratstrom in die Vorflotation eingeleitet ist.

3. Anlagenlayout nach Anspruch 2, **dadurch gekennzeichnet, dass** der zumindest einen Teilstrom der Rejekts umfassende Filtratstrom der am Anfang des Zyklus angeordneten Stoffauflösung zugeleitet ist.

4. Deinkingverfahren zur Aufbereitung von Altpapier, mit zumindest zwei hintereinandergeschalteten Deinkingkreisläufen, wobei
4.1 eine Vorflotation in einem ersten Kreislauf Druckfarben sowie Füll-, Fein- und Faserstoffe aus einer Fasersuspension entfernt, sodass ein vorgereinigter Faserstoffstrom bereitsteht,
4.2 ein Disperger mittels Energieeintrag den vorgereinigten Faserstoffstrom behandelt, um anhaftende Druckfarben zu lösen oder abgelöste und zu große Druckfarbenteilchen zu zerkleinern, und
4.3 dem Disperger nachgeschaltet eine Nachflotation in einem zweiten Kreislauf eine Rejektfraktion mit dispergierten Druckfarben sowie Füll-, Fein- und Faserstoffen abtrennt, **dadurch gekennzeichnet, dass**
4.4 zumindest ein Teilstrom des Rejekts der Nachflotation dem vorangehenden ersten Kreislauf, und zwar vor die oder in die Vorflotation und/oder an eine der Flotation vorangehende Position einer parallelen Deinkingstraße zur Erzeugung eines weiteren deinkten Faserstoffs rückgeführt wird.

5. Deinkingverfahren nach Anspruch 4, **dadurch gekennzeichnet, dass** die rückgeführten Rejekts zumindest teilweise direkt in einen aus einer der Vorflotation vorangeschalteten Reinigung kommenden Gutstoffstrom und/oder indirekt über einen Filtratstrom in die Vorflotation eingeleitet wird.

6. Deinkingverfahren nach Anspruch 5, **dadurch gekennzeichnet, dass** der zumindest einen Teilstrom des Rejekts umfassende Filtratstrom der am Anfang des Prozesses angeordneten Stoffauflösung zugeleitet wird.

## Revendications

1. Implantation pour le traitement des déchets de papier, avec au moins deux circuits d'alimentation en série, au moins
1.1 une préflotation dans un premier circuit,
1.2 a disperser and
1.3 une postflotation connectée après le disperseur dans un second circuit, grâce à laquelle une fraction de rejet avec une encre dispersée, des charges, des fines et des fibres peut être séparée,
**caractérisé en ce que**
1.4 Au moins un flux partiel de rejets de la postflotation est renvoyé au premier circuit précédent, avant et/ou dans la préflotation et/ou dans une autre position de flottaison précédente d'une ligne de désencrage parallèle pour la production d'une autre pâte désencrée.

2. Installation de plantation selon la revendication 1, **caractérisée en ce qu'**au moins un flux partiel de rejets recyclés est amené directement dans un flux de produit provenant d'un nettoyage en amont de la préflotation et/ou indirectement par un flux de filtrat vers la préflotation.

3. Installation de plantation selon la revendication 2, **caractérisée en ce que** le courant de filtrat contenant au moins un courant partiel de rejets est amené au processus de dissolution des solides au début du cycle.

4. Procédé de désencrage pour le traitement de déchets de papier, avec au moins deux circuits de désencrage connectés en série, dans lequel
4.1 le procédé de traitement des déchets de papier avec au moins deux circuits de consommation en série, dans lequel,
4.2 un disperseur au moyen d'un apport d'énergie traite le flux de pâte prénettoyée afin de décoller les encres adhérentes ou de les fragmenter en particules d'encre
4.3 une postflotation après le disperseur dans un second circuit sépare une fraction de rejet avec des encres dispersées ainsi que des charges, des fines et des fibres,
**caractérisé en ce que**
4.4 Au moins un courant partiel de rejets de la postflotation est renvoyé au premier circuit précédent, avant ou dans la préflotation et/ou dans une position de flottation antérieure à une ligne de désencrage parallèle pour la production d'une autre pâte désencrée.

5. Procédé de désencrage selon la revendication 4, **caractérisé en ce que** les rejets recyclés sont pris au moins en partie directement dans un flux de produit provenant d'un nettoyage en amont de la préflotation et/ou indirectement d'un flux de filtrat dans la préflotation.

6. Procédé de désencrage selon la revendication 5, **caractérisé en ce que** le courant de filtrat contenant le ou les courants partiels de rejets est amené au processus de dissolution des solides au début du cycle.
